# EUROPÄISCHE PATENTSCHRIFT

(11) **EP 2 913 110 B1**
(45) Veröffentlichungstag und Bekanntmachung des Hinweises auf die Patenterteilung: **13.09.2017**
(21) Anmeldenummer: 15000419.0
(22) Anmeldetag: 12.02.2015
(51) Int. Cl.: B02C 13/14, B29B 17/02, B02C 13/286

(54) **VERFAHREN ZUR DELAMINIERUNG VON GEMAHLENER KUNSTSTOFFFOLIE**
METHOD FOR THE DELAMINATION OF GROUND PLASTIC FILM
PROCÉDÉ DE DÉCOLLEMENT INTERLAMINAIRE DE FILM PLASTIQUE BROYÉ

(30) Priorität: 28.02.2014 DE 102014102696; 15.05.2014 DE 102014106888
(43) Veröffentlichungstag der Anmeldung: 02.09.2015
(73) Patentinhaber: Diamat Maschinenbau GmbH, 91550 Dinkelsbühl (DE)
(72) Erfinder: Lechler, Roland, 91550 Dinkelsbühl (DE); Stark, Uwe, 80999 München (DE)
(74) Vertreter: Schneider, Andreas

(56) Entgegenhaltungen:
- EP-B1- 2 650 324
- WO-A1-93/05883
- US-A- 4 199 109
- US-A- 5 443 652

## Beschreibung

Die Erfindung betrifft ein Verfahren zur Delaminierung von gemahlener Kunststofffolie.

Viele Lebensmittelverpackungen werden heute als sogenannte "Convenient Packs" angeboten. Besonders für die zunehmende Anzahl an Singlehaushalten und Kleinfamilien sind diese Packungsgrößen interessant. Um für den Kunden das verpackte Lebensmittel sichtbar zu machen, wird vornehmlich ein transparenter Tray (Schale) verwendet, welcher aus recyceltem A-PET hergestellt wurde. Dieser Kunststoff hat seine Qualitäten vor allem in der Transparenz, Barriereeigenschaften (wichtig für die Haltbarkeit), seiner Schlagfestigkeit und nicht zuletzt wegen seines Preises. Der relativ niedrige Preis, gesehen zu anderen Verpackungskunststoffen, kommt daher, daß sehr viele A-PET-Getränkeflaschen auf dem Markt sind, die recycelt und wiederverwertet in eine Folie extrudiert und aus dieser Folie anschließend der Tray hergestellt werden können.

Nach dem Füllen des Lebensmittelgutes in die Grundschale wird die Verpackung oft mit einem aufreißbaren (peel-able) dünnen Deckel aus PE-Folie verschlossen und versiegelt. Da aber der A-PET-Grundkörper und der PE-Film von Natur aus nicht miteinander versiegelbar sind, wird das A-PET üblicherweise mit einer dünnen Schicht aus PE laminiert, um anschließend PE auf PE versiegeln zu können.

Nachteil dieses Verbundwerkstoffes aus A-PET mit laminiertem PE ist allerdings, daß er sich nicht mehr zu einer transparenten A-PET-Folie wiederverwerten läßt, da das auflaminierte PE das PET beim Recyceln milchig und trübe werden läßt. Mit anderen Worten, wenn man eine mit PE laminierte A-PET Folie in eine Mühle gibt und daraus Mahlgut produziert und anschließend auf einen Folienextruder gibt, wird die daraus produzierte Folie nicht mehr glasklar und transparent, sondern milchig weiß und trübe. Damit einher geht auch ein Wertverlust des Basiskunststoffes, da das mit PE verschmutzte PET-Mahlgut nicht mehr den Reinheitsgrad des Ausgangsmaterials besitzt. Eine Sortentrennung erfolgt bisher nicht.
Aus EP 2 650 324 B1 ist ein Verfahren zur Wiederverwertung von Kunststofferzeugnissen bekannt, bei dem ein aus Schichten verschiedener Kunststoffe bestehender Artikel beispielsweise derart behandelt wird, daß das physikalische Abtrennen der Materialien voneinander durch Einwirkung von Scherkräften der Artikel aufeinander erfolgt. Nachteilig dabei ist, daß nach dem dort vorgeschlagenen Verfahren die Materialtrennung stets zwingend mit der Zufuhr von Wärme zum Überschreiten der Erweichungstemperatur der zu trennenden Kunststoffe verbunden ist.
Eine Aufgabe der vorliegenden Erfindung ist es, ein Recycling unter Vermeidung dieser Nachteile durchzuführen, insbesondere mit besonders einfachen konstruktiven Mitteln eine sortenreine Trennung der Materialien zu erreichen.

Diese Aufgabe wird durch ein Verfahren nach Anspruch 1 gelöst.

Danach ist ein Verfahren zur Delaminierung von gemahlener Kunststofffolie vorgesehen, bei dem ein Mahlgut, bestehend aus gemahlenen Kunststoffschnitzeln, jeder Kunststoffschnitzel bestehend aus einem mit einem Film aus einem ersten Kunststoffmaterial versehenen Träger aus einem zweiten Kunststoffmaterial, in einem Prozeßbehälter bewegt wird und sich bei den Kunststoffschnitzeln der Film von dem Träger dadurch löst, daß auf das Mahlgut aufgrund seiner eigenen Gewichtskraft Scherkräfte wirken, wobei sich das Mahlgut in übereinanderliegenden Schichten unterschiedlicher Geschwindigkeit relativ zueinander bewegt.

Zur Durchführung dieses Verfahrens eignet sich eine Vorrichtung (kein Teil der beanspruchten Erfindung), mit einem Delaminator, der einen Prozeßbehälter aufweist, mit in dem Prozeßbehälter angeordneten, antreibbaren Bewegungselementen zum Bewegen des Mahlgutes derart, daß sich bei den Kunststoffschnitzeln der Film von dem Träger dadurch löst, daß auf das Mahlgut aufgrund seiner eigenen Gewichtskraft Scherkräfte wirken, mit einer oberhalb des Bewegungselemente vorgesehenen Mahlgutzuführung und mit einer unterhalb der Bewegungselemente vorgesehenen Mahlgutentnahme, wobei Brems- und/oder Widerstandserzeugungselemente vorgesehen sind zum Verändern der Geschwindigkeit des sich in einer Schicht bewegenden Mahlgutes gegenüber der Geschwindigkeit des sich in einer benachbarten Schicht bewegenden Mahlgutes derart, daß sich das Mahlgut in übereinanderliegenden Schichten unterschiedlicher Geschwindigkeit relativ zueinander bewegt.

Darüber hinaus kann eine Anlage vorgesehen (kein Teil der beanspruchten Erfindung), mit einer solchen Vorrichtung und einer Trennvorrichtung, insbesondere einem Windsichter, zum mechanischen Trennen des ersten Kunststoffmaterials von dem zweiten Kunststoffmaterials.

Kernidee der Erfindung ist es, eine Technologie bereitzustellen, gemäß der das auflaminierte PE wieder von der A-PET-Basisfolie delaminiert und entfernt wird, um so die sortenreine Wiederverwertung des A-PETs zu gewährleisten. Dazu wird die laminierte A-PET/PE-Verbundfolie auf einer Mühle wieder eingemahlen und die eingemahlenen Schnitzel auf einen Prozeß gegeben, der das PE wieder von den A-PET-Basisschnitzeln trennt und separiert. Am Ende des Prozesses erhält man dann etwa zu 90 bis 95% sortenreine A-PET-Schnitzel (Mahlgut). Das PE wird getrennt und in einem separaten Auffangbehälter gesammelt.

Grundlage des erfindungsgemäßen Trennprozesses ist es, daß die Trennung des PE-Films von dem A-PET-Grundträger rein mechanisch über die Reibung der Schnitzel aneinander erfolgt. Dabei ist es wichtig, daß sich die einzelnen, übereinanderliegenden Schitzelschichten im Delaminator relativ zueinander bewegen. Mit anderen Worten müssen die einzelnen Schichten eine relative Schichtengeschwindigkeit zueinander aufweisen, da erst dadurch Kollisionen und Reibungen der Schnitzel aneinander verursacht werden. Vorzugsweise wird dies durch ein künstliches Abbremsen oder Anhalten einzelner Schichten oder von Teilen davon erreicht.

Bei der angestrebten sortenreinen Trennung des Kunststoffverbundes aus A-PET und auflaminiertem PE muß davon ausgegangen werden, daß das Verbundmaterial nicht immer konstant gleich laminiert (verklebt) wurde. Das kann im Extremfall dazu führen, daß das auflaminiert PE überhaupt nicht mehr von dem A-PET-Grundträger trennbar ist. Eine 100%-ige Effizienz des erfindungsgemäßen Trennverfahrens ist daher nur angenähert erreichbar.

Um auf unterschiedliches, stärker oder schwächer verklebtes Ausgangsmaterial reagieren zu können, ist der verwendete Delaminator vorzugsweise derart ausgebildet, daß die erreichbare Delaminierungswirkung in Abhängigkeit von der benötigten Ablösekraft flexibel einstellbar ist. Anders ausgedrückt sind die erfindungsgemäß hervorgerufenen Abscherkräfte und -momente, welche die Trennung der dünnen PE-Schicht von dem dickeren A-PET-Schnitzel bewirken sollen, nicht immer konstant, sondern lassen sich variieren und von dem Maschinenbediener an die jeweiligen Bedingungen anpassen.

Die Erfindung wird nachfolgend anhand der Figuren näher erläutert. Dabei zeigen:
- Fig. 1: ein Schnittbild durch eine zu delaminierende Folie,
- Fig. 2: die für die Durchführung des Verfahrens eingesetzte Anlage,

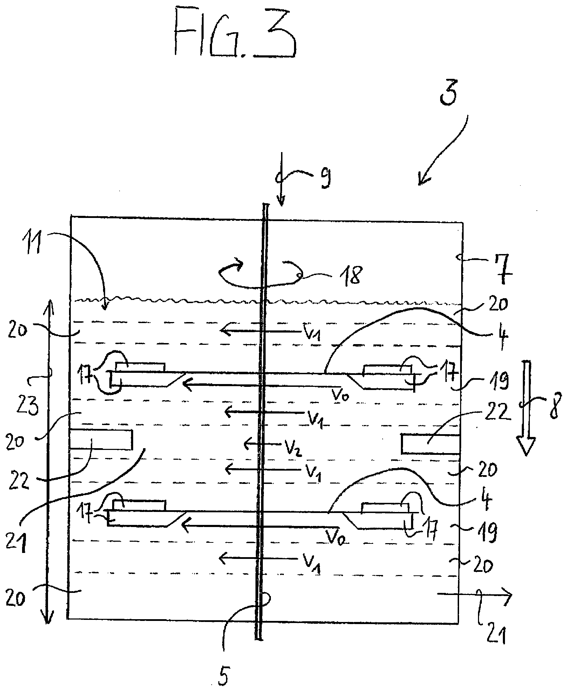

- Fig. 3: eine Darstellung verschiedener Schichten mit Mitnehmerwerkzeugen und Bremswerkzeugen.

Sämtliche Figuren zeigen die Erfindung nicht maßstabsgerecht, dabei lediglich schematisch und nur mit ihren wesentlichen Bestandteilen.

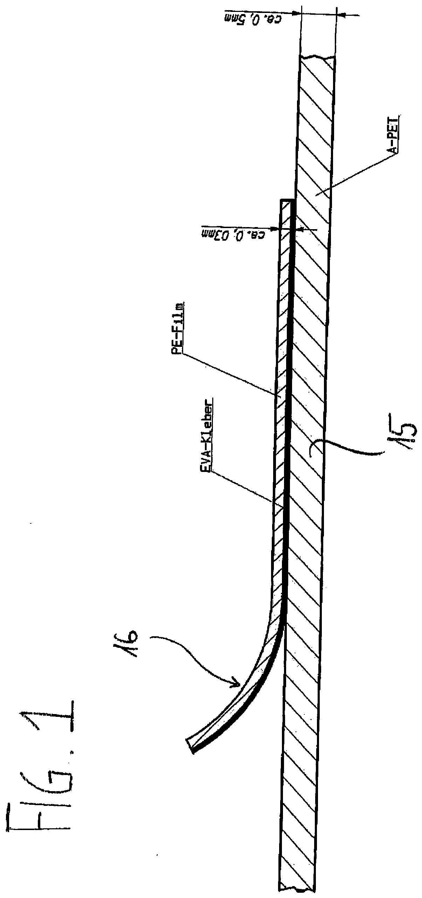

Der zu recycelnde A-PET/PE-Folienverbund weist hinsichtlich der A-PET-Grundfolie eine typische Verbundstärke von 0,3 bis 0, 8 mm und hinsichtlich des auflaminierten PE-Films eine typische Verbundstärke von 0,03 bis 0,05 mm auf, siehe Fig. 1.

Das Mahlen erfolgt in einer geeigneten Mühle (nicht dargestellt) . In dieser Mühle wird das Verbundmaterial wieder eingemahlen. Die Korngröße beträgt üblicherweise 6 bis 12 mm. Das Mahlgut in Form von Schnitzeln wird anschließend in sogenannte Big-Bags oder Octabins abgefüllt, mit einem typische Inhalt von etwa 1 bis 3m³ Mahlgut. Das Mahlen kann beispielsweise in einer Mühle mit gegeneinander rotierenden Messern erfolgen.

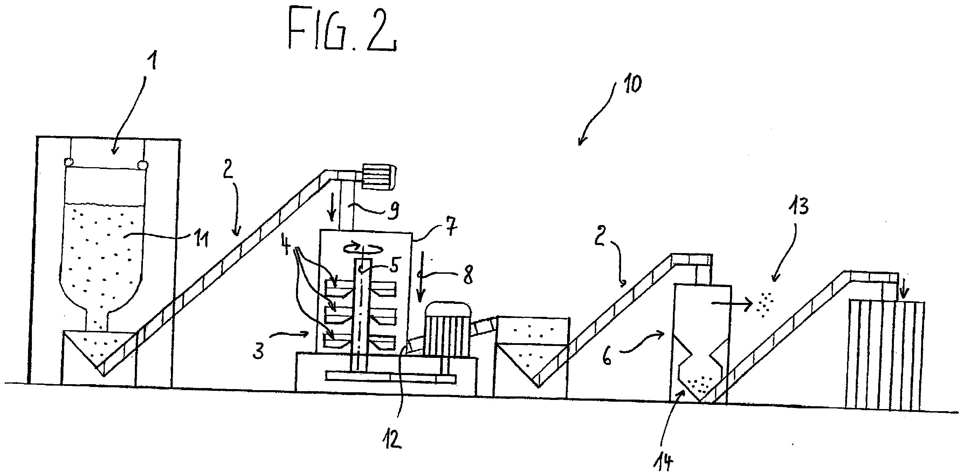

Die Anlage 10 zum Recyceln von Kunststoff, siehe Fig. 2, verwendet als Eingangsmaterial das Verbundmahlgut 11, also das mit PE-Film laminierte A-PET-Folienmahlgut. Dieses wird über eine geeignete Aufhängevorrichtung 1 und Spiralschnecken 2 in einen Delaminator 3 gefüllt. Dort wird über rotierende Bewegungselemente 4 für das Mahlgut 11, vorzugsweise in Form von Mitnehmerscheiben, das Mahlgut 11 in eine rotierende Bewegung um die Mittellängsachse 5 eines im wesentlichen kreiszylinderförmigen Prozeßbehälters 7 versetzt. Hierzu verfügen die Bewegungselemente 4 über vorzugsweise in Mittellängsrichtung des Prozeßbehälters 7 und damit in Prozeßrichtung 8 weisende Mitnehmerwerkzeuge 17 oder andere Elemente mit einer geeigneten Geometrie zur Mitnahme des Mahlgutes 11 in Drehrichtung 18. Die Mitnehmerscheiben 4 sind fest mit der Drehachse 5 verbunden.

Während die unmittelbar von den Bewegungselementen 4 mitgenommenen bzw. in Bewegung versetzten Schichten 19 des Mahlgutes 11 direkt von den Bewegungselementen 4 beaufschlagt werden, werden die jeweils darunterliegenden Schichten 20 an Mahlgut 11 nur aufgrund der Drehbewegung der jeweils darüberliegenden Mahlgut-Schichten 19 (und unter Berücksichtigung ihres Eigenwiderstandes gegen diese Bewegung) mitgenommen und bewegt. Jeweils darunterliegende Schichten 20 bewegen sich somit weniger stark als jeweils darüberliegende Schichten 19. Die Bewegung des Mahlgutes 11 um die Mittellängsachse 5 pflanzt sich auf diese Weise in Prozeßrichtung 8 von oben nach unten im Prozeßbehälter 7 fort. Vorzugsweise sind in Prozeßrichtung 8 mehrere rotierende Bewegungselemente 4 vorgesehen, die diese Bewegung des Mahlgutes 11 für jeweils einen zwischen diesen Bewegungselementen 4 liegenden vertikalen Abschnitt des Prozeßbehälters 7 hervorrufen bzw. unterstützen.

Das Ablösen des dünnen PE-Films von dem A-PET-Basisschnitzel erfolgt rein mechanisch über Scher- und Fliehkräfte, hervorgerufen durch die Rotation der Bewegungselemente 4.

Mit anderen Worten: Das in den Prozeßbehälter 7 gegebene Mahlgut 11 wird durch die Bewegungselemente 4 in eine Rotation versetzt. Dabei reibt das Mahlgut 11 aneinander. Aufgrund der Schwerkraft und/oder aufgrund der Beaufschlagung des Mahlgutes 11 durch die Bewegungselemente 4 bewegt sich das Mahlgut 4 auch in Prozeßrichtung 8 nach unten. Zugleich übt das Mahlgut 11 Druck auf jeweils darunterliegende Schichten des Mahlgutes 11 aus. Durch eine Überlagerung beider Mahlgut-Bewegungen bzw. -Kräfte, nämlich der Drehung des Mahlgutes 11 einerseits und dem ausgeübten Druck bzw. der Abwärtsbewegung des Mahlgutes 11 andererseits, kommt es zum Abscheren und damit zur mechanischen Trennung der Materialbestandteile 13, 14. Die notwendigen Abschermomente werden im wesentlichen oder ausschließlich über die Gewichtskraft der eingefüllten Batchmenge erreicht, ggf. unterstützt durch die aufgrund der Drehbewegung des Mahlgutes 11 entstehenden Momente.

Anders ausgedrückt: Nicht die Bewegungselemente 4 oder die Mitnehmerwerkzeuge 17 in dem Delaminator 3 lösen den PE-Film von dem A-PET-Träger ab, sondern die Folienschnitzel reiben, beaufschlagt durch ihr Eigengewicht, aneinander (Korn gegen Korn), was das Ablösen bewirkt. Die Scherwirkung vergrößert sich wegen der steigenden Gewichtskraft (Eigendruck des Mahlgutes 11), je weiter unten im Prozeßbehälter 7 sich die Mahlgutschichten befinden. Die auf die Folienschnitzel wirkenden Druckkräfte können aber auch durch die Verwendung zusätzlicher Werkzeuge erhöht werden.

Die Arbeitsweise des Delaminators 3 und der gesamten Anlage 10 ist kontinuierlich, das bedeutet, unten (an einer Mahlgutentnahme 12) wird ständig gelöstes A-PET/PE entnommen und oben (an einer Mahlgutzuführung 9) ständig frisches Laminatmahlgut 11 nachgefüllt. Der Arbeitsdurchgang von oben nach unten dauert je nach Einstellung und Befüllhöhe 23 beispielsweise zwischen 25 bis 50 min.

Der Reinheits- und Ablösegrad für einen Durchgang liegt beispielsweise zwischen 30 und 60 Prozent, je nachdem wie stark der Verbund aus A-PET 14 und PE 13 vorher auflaminiert war und wie leicht sich das PE 13 ablösen läßt.

Durch Hintereinanderschaltung zweier oder mehrerer solcher Delaminiereinheiten 3 in einer Anlage 10 (in Fig. 2 nicht dargestellt) kann der Ablösegrad bis auf 90 bis 95% gesteigert werden. Durch diese Sortenreinheit kann daraus produzierte Folie erneut glasklar und hochtransparent sein.

Nach Entnahme aus der Delaminiereinheit 3 wird der gelöste A-PET/PE-Verbund, also das bereits voneinander getrennte, aber noch vermischte Material 12 über einen Spiral- oder Schneckenförderer (Spiralschnecke 2) auf einen sogenannten Windsichter 6 gegeben. Durch Ausnutzen der Eigenschaft, daß durch Fliehkräfte und einen eingeblasenen Luftstrom sich schwerere von leichteren Partikeln trennen, wird das gelöste PE 13 (da sehr leicht) ausgeblasen und in dafür vorgesehenen Behältnissen gesammelt. Die A-PET-Basisschnitzel 14 sind schwerer und fallen durch die Gewichtskraft nach unten durch, in den dafür vorgesehenen Behälter.

Durch Hintereinanderschaltung mehrerer solcher Windsichtungsstufen 6 kann der Reinheitsgrad und die Effizienz entsprechend angepaßt bzw. optimiert werden.

Weitere zum Betrieb der Anlage 10 benötigte Elemente, wie beispielsweise motorische Antriebe für die Spiralschnecken 2 und die Bewegungselemente 4 sowie Getriebe usw., sind in Fig. 2 lediglich angedeutet.

Die Bewegungselemente 4 sind in einer bevorzugten, besonders einfach zu realisierenden Ausführungsform der Erfindung alle auf einer gemeinsamen Drehachse 5 angebracht. Da sich die Drehbewegung ausgehend von jedem der Bewegungselemente 4 von einer Schnitzelschicht 19 über Scherreibung und Scherkräfte in die nächste Schicht 20 fortpflanzt, würde sich irgendwann der gesamte Inhalt des Prozeßbehälters 7 mit der gleichen Rotationsgeschwindigkeit drehen. Relative Scherbewegungen zueinander wären praktisch nicht mehr vorhanden, oder aber diese wären so gering, daß die Abschereffizienz auf ein Minimum sinken würde. Nachfolgend wird beschrieben, auf welche bevorzugte maschinentechnische Art und Weise erfindungsgemäß unterschiedliche Schichtengeschwindigkeiten hergestellt, beibehalten bzw. eingestellt werden.

Die Schichtengeschwindigkeit wird vorzugsweise konstruktiv beeinflußt, indem die an den Bewegungselementen 4 angebrachten Mitnehmerwerkzeuge 17 geometrisch so gestaltet sind, daß sie die darüber und/oder darunter liegenden, jeweils unmittelbar beaufschlagbaren Schitzelschichten 19 so mitnehmen, daß dabei eine optimale Rotation - also eine bestmögliche Mitnahme aller Schnitzel der Schicht in eine rotierende Bewegung um die Achse 5 - erreicht wird, zugleich die Schnitzel dabei aber nicht mechanisch beschädigt oder zerstört werden. Vorzugsweise ist zu diesem Zweck auch der Abstand der Bewegungselemente 4 zueinander variabel einstellbar. Die Mitnehmerwerkzeuge 17 erstrecken sich vorzugsweise ausgehend von einem scheibenförmigen, als Träger für die Mitnehmerwerkzeuge 17 dienenden Bewegungselement 4 in Prozeßrichtung 8 und sind beispielsweise schaufelblattförmig ausgebildet, wobei sie sich jeweils über den gesamten oder nur einen Teil des Radius des Prozeßbehälters 7 strecken können.

Die Schichtengeschwindigkeit wird in einer besonders bevorzugten Ausführungsform der Erfindung vorzugsweise darüber hinaus konstruktiv dadurch beeinflußt, daß in dem Prozeßbehälter 7 eine Anzahl geeigneter Brems- und/oder Widerstandserzeugungselemente 22 vorgesehen sind, welche in die Drehbewegung der darunter- und/oder darüberliegenden, jeweils unmittelbar mit diesen Elementen 22 in Kontakt stehenden Schichten 21 oder von Teilen dieser Schichten 21 mit dem Ziel einer Aufrechterhaltung oder Erhöhung der Schichtenreibung eingreifen. Genauer gesagt sind die Brems- und/oder Widerstandserzeugungselemente 22 derart ausgebildet und angeordnet, daß sie die sich zwischen den Bewegungselementen 4 aufhaltenden Schnitzelschichten 20, 21 daran hindern, sich irgendwann alle mit derjenigen gleichen Rotationsgeschwindigkeit zu bewegen, wie die von den Bewegungselemente 4 unmittelbar beaufschlagten Schnitzelschichten 19. Die zum Anhalten, Unterbrechen, Stören und/oder Abbremsen der Drehbewegung der Schnitzel in den Schnitzelschichten 21 ausgebildeten Brems- und/oder Widerstandserzeugungselemente 22 sind zu diesem Zweck von den die Drehbewegung hervorrufenden Bewegungselementen 4 bzw. den Mitnehmerwerkzeugen 17 beanstandet angeordnet. In einer einfachen Ausführung sind die Elemente 22 in definierter Anzahl an der Behälterwand des Prozeßbehälters 7 angebracht und ragen nach Art von radial ausgerichteten Armen in das Behälterinnere hinein. Die jeweils zur Beeinflussung einer bestimmten Schicht vorgesehenen Elemente 22 liegen dabei auf einer Höhe und sind vorzugsweise gleichmäßig voneinander beanstandet. Die Elemente 22 sind beispielsweise paddelförmig ausgebildet und durchdringen während des Betriebes die radial äußeren Bereiche der sich zu diesem Zeitpunkt auf der Höhe der Elemente 22 bewegenden Schicht 21, wodurch diese unmittelbar abgebremst werden. Die sich daran anschließenden radial inneren Bereiche dieser Schicht 21 werden hierdurch mittelbar ebenfalls abgebremst. Im Ergebnis führt dies zu unterschiedlichen Geschwindigkeiten der benachbarten Schichten. Die Geschwindigkeit v(0) des Materials in der unmittelbar beaufschlagten ersten Schicht 19 ist größer als die Geschwindigkeit v(1) des Materials in der benachbarten, lediglich mitgenommenen zweiten Schicht 20, die sich in Prozeßrichtung 8 an die erste Schicht 19 anschließt. Die Geschwindigkeit v(2) des Materials in der sich daran anschließenden abgebremsten dritten Schicht 21 ist aufgrund der Bremswirkung der Elemente 22 deutlich geringer als die Geschwindigkeit v(1). Die Geschwindigkeit v(1) der darauffolgenden, bereits wieder von der übernächsten, fünften Schicht 19 mitgenommenen vierten Schicht 20 ist hingegen wieder größer. Die Geschwindigkeit v(0) der sich in Prozeßrichtung 8 anschließenden fünften Schicht 19, die von den an der Oberseite der nächsten Mitnehmerscheibe 4 angeordneten Mitnehmerwerkzeugen 17 unmittelbar beaufschlagt wird, ist erneut maximal. Obwohl dies nur eine stark vereinfachte Beschreibung der Vorgänge in den Schnitzelschichten ist, wird daraus das zugrundliegende Prinzip deutlich.

Die Schichtengeschwindigkeit wird darüber hinaus vorzugsweise steuerungstechnisch durch eine Begrenzung und/oder Regelung bzw. Steuerung des Füllstandes des in den Prozeßbehälter 7 einzubringenden Mahlgutes 11 beeinflußt. Durch eine Regelung des Füllstandes über entsprechende Sensorik wird der Gewichtsdruck innerhalb der in dem Prozeßbehälter 7 stehenden Säule des Mahlgutes 11 gesteuert. Da die Wirkung der Abscherkräfte der Schnitzel zueinander direkt proportional von dem Füllstand abhängt ist, erfolgt über eine Anpassung des Füllstandes unmittelbar eine Veränderung der Effizienz des Trennverfahrens.

Die Schichtengeschwindigkeit wird in einer besonders bevorzugten Ausführungsform der Erfindung darüber hinaus vorzugsweise weiterhin steuerungstechnisch durch eine Regelung der Antriebsdrehzahl und der Antriebsdrehmomente beeinflußt. Über entsprechende Temperatursensorik wird dabei ständig die Temperatur und/oder die Temperaturveränderung in den einzelnen Schichten 19, 20, 21 des Mahlgutes 11 erfaßt. Da auch die Materialtemperatur direkt proportional zu der Abschereffizienz ist, läßt sich die Betriebsweise der Anlage 10 auch über die Materialtemperatur steuern oder regeln. Dabei gilt, daß die Reibungskräfte und Momente in dem Prozeßbehälter 7 um so größer sind, je schneller die Temperatur in dem Füllgut ansteigt. Die beste Ablöseeffizient wird bei einer Materialtemperatur unterhalb von etwa 80°C erreicht, da dort sowohl das PE, als auch das A-PET noch hohe Temperaturfestigkeit und Zähigkeit besitzen.

Da die Erweichungstemperatur des PE weit unter der von A-PET liegt und der zuvor aufgebrachte PE-Film überdies dünner als das A-PET-Trägermaterial ist, stellt das PE in dem Delaminierprozeß das verfahrenstechnisch kritischere Material dar. Da PE ab Temperaturen von ca. 80°C bis 90°C starke Erweichungstendenzen zeigt, muß der Prozeß durch entsprechende Regelung der Maschinendrehzahlen, -momente und der Füllhöhe 23 unterhalb dieser Temperaturen gehalten werden, um eine lokale Überhitzung, ein Anschmelzen des PE und damit ein Verkleben (Verschmelzen) der Schnitzel und potentiell der gesamten Recyclingcharge zu verhindern.

In einer einfachen Ausführungsform der Erfindung wird der gewünschte Ablösegrad unter Verwendung einer Temperatursensorik bei gleichbleibender Antriebsdrehzahl über den Parameter der Füllhöhe 23 beeinflußt. Bei der ersten (initialen) Befüllung des Prozeßbehälters 7 wird dabei solange Verbundmaterial 11 zugegeben, bis die Anschmelztemperatur von PE erreicht ist. Anschließend wird über eine entsprechende Ansteuerung der Mahlgutzuführung 9 nur noch in einem Maße nachgefüllt, daß diese Maximaltemperatur nicht mehr erreicht wird, die Materialtemperatur also immer unterhalb der kritischen Anschmelztemperatur bleibt.
Die gesamte Anlageneffizienz, Wirtschaftlichkeit und Leistung wird durch die oben genannten Einflußparameter ingenieurtechnisch beeinflußt und bestimmt. Die hierfür erforderlichen Steuerungs- und/oder Regelungseinrichtungen müssen nicht im einzelnen beschrieben werden.

Die Erfindung ist nicht auf das Ausführungsbeispiel beschränkt. So kann die Idee auch auf das Trennen anderer auflaminierter Kunststoffmaterialien übertragen werden.

### Bezugszeichenliste

- 1: Aufhängevorrichtung
- 2: Spiralschnecke
- 3: Delaminator
- 4: Bewegungselement
- 5: Mittellängsachse
- 6: Windsichter
- 7: Prozeßbehälter
- 8: Prozeßrichtung
- 9: Mahlgutzuführung
- 10: Anlage
- 11: Verbundmahlgut
- 12: Mahlgutentnahme
- 13: gelöstes PE
- 14: A-PET Schnitzel
- 15: Träger
- 16: Film
- 17: Mitnehmerwerkzeug
- 18: Drehrichtung
- 19: unmittelbar beaufschlagte Schicht
- 20: mitgenommene Schicht
- 21: abgebremste Schicht
- 22: Bremswerkzeug
- 23: Füllhöhe

## Patentansprüche

1. Verfahren zur Delaminierung von gemahlener Kunststofffolie, bei dem ein Mahlgut (11), bestehend aus gemahlenen Kunststoffschnitzeln, jeder Kunststoffschnitzel bestehend aus einem mit einem Film (16) aus einem ersten Kunststoffmaterial (13) versehenen Träger (15) aus einem zweiten Kunststoffmaterial (14), in einem Prozeßbehälter (7) bewegt wird und sich bei den Kunststoffschnitzeln der Film (16) von dem Träger (15) dadurch löst, daß auf das Mahlgut (11) aufgrund seiner eigenen Gewichtskraft Scherkräfte wirken, **dadurch gekennzeichnet, daß** sich das Mahlgut (11) in übereinanderliegenden Schichten (19, 20, 21) unterschiedlicher Geschwindigkeit relativ zueinander bewegt.

2. Verfahren nach Anspruch 1, bei dem die relative Schichtengeschwindigkeit einzelner Schichten (19, 20, 21) zueinander gezielt veränderbar ist.

## Claims

1. Method for the delamination of ground plastics foil, where a regrind (11) consisting of ground plastics slivers, each plastics sliver consisting of a substrate (15) made of a second plastics material (14) provided with a film (16) made of a first plastics material (13), is moved in a process container (7), and shear forces acting on the regrind (11) by virtue of its own weight cause the film (16) to separate from the substrate (15) in the plastics slivers, **characterized in that** the regrind (11) moves in relation to one another in overlaying layers (19, 20, 21) of different velocity.

2. Method according to Claim 1, where the layer velocity of individual layers (19, 20, 21) in relation to one another can purposefully be changed.

## Revendications

1. Procédé de décollement interlaminaire d'un film plastique broyé, selon lequel un produit broyé (11), constitué de copeaux en plastique broyés, chaque copeau en plastique étant constitué d'un support (15) en un deuxième matériau plastique muni d'un film (16) en un premier matériau plastique (13), est déplacé dans un contenant de procédé (7) et le film (16) se décolle du support (15) dans les copeaux en plastique par action de forces de cisaillement sur le produit broyé (15) en raison de sa force de pesanteur propre, **caractérisé en ce que** le produit broyé (11) se déplace en couches superposées (19, 20, 21) de vitesses différentes les unes par rapport aux autres.

2. Procédé selon la revendication 1, selon lequel la vitesse de couche relative des couches individuelles (19, 20, 21) les unes par rapport aux autres peut être modifiée de manière ciblée.
